# EUROPEAN PATENT SPECIFICATION

(11) **EP 0 404 217 B1**
(45) Date of publication and mention of the grant of the patent: **16.02.1994**
(21) Application number: 90201453.9
(22) Date of filing: 06.06.1990
(51) Int. Cl.: A01G 25/09

(54) **Unit for driving the hose winding drum of automatic irrigation sprinklers in general**
Einheit zum Antreiben der Schlauchtrommel von automatischen Bewässerungssprinklern im allgemeinen
Unité d'entraînement pour rouleau enrouleur de tuyau d'arroseurs d'irrigation automatiques en général

(30) Priority: 19.06.1989 IT 4684889
(43) Date of publication of application: 27.12.1990
(73) Proprietor: Turion, Jean Claude, F-34170 Castelnau le Lez (FR)
(72) Inventor: Turion, Jean Claude, F-34170 Castelnau le Lez (FR)
(74) Representative: Corradini, Corrado

(56) References cited:
- EP-A- 0 210 161
- AT-B- 364 566
- US-A- 4 003 519

## Description

This invention relates to a unit for driving the hose winding drum of self-propelled irrigation sprinklers in general.

It is well known that in irrigating large pieces of ground, automatic sprinklers able to independently move from one end of a strip of ground to the other are widely used.

Such known sprinklers consist essentially of a trolley on which a drum of horizontal axis is mounted on which a hose is wound in several superposed helical layers and has its free end connected to a sprinkler device mounted on a skid or carriage.

The other end of the hose is fed with irrigation water through the drum hub via a convenient seal joint, the rewinding of the hose, by which the sprinkler skid is pulled towards the drum trolley, being done by motor means of hydraulic type.

In one of the most widely used methods, the motor means for rotating the drum consist of a turbine through which the irrigation water passes before reaching the hose, a by-pass pipe being provided to adjust the turbine speed.

The methods used up to the present time, which it is not necessary to describe in detail, have all proved inconvenient because the irrigation water is subjected to excessive throttling, both at the turbine and along the by-pass pipe, giving rise to consistent undesirable pressure drops. The power of the water fed to the sprinkler is reduced, with the result that the throw of the water jet is reduced, with a reduction in the width of the strip of ground irrigated.

In addition to this, known systems have proved relatively bulky, relatively heavy and relatively complex, and thus relatively costly.

An example of known art is disclosed in AT-B-364566 which disloses a main irrigator water passage duct for connecting a pump unit to the hose and a turbine connected to the said duct. Said turbine has an upstream deviation member sensitive to the diameter on which the hose is wound on the drum, in order to vary the width of entry duct.

The present invention, as it is characterised in the claims has the object to provide a drive unit for the hose winding drum which is able to obviate the aforesaid within the framework of a simple, rational and reliable design.

The concept by which the object of the invention is attained is to provide a main passage duct for the irrigation water which communicates with the adjacent casing of a turbine via an aperture in the wall which can be opened or closed, including partially, by a wall mobile parallel to the axis of the main duct and associated with a deflector which cuts said axis and which moves between two positions in which it either leaves said main duct completely unobstructed or partially obstructs it.

According to the invention, the partially open position of said two mutually associated walls is set manually from the outside on the basis of the amount of flow to be deviated to obtain the desired average drum winding speed, while their position which provides complete closure of the turbine feed port plus complete opening of the main duct is attained by the action of a lever which is operated by the sprinkler carriage at the end of the cycle.

To vary the winding speed of the drum above and below the average speed in accordance with the diameter on which the hose is being rewound, the invention comprises a flow deviation fin located within the flow directed towards the turbine impeller, its position varying from a position parallel to the flow, to a position inclined to the flow by virtue of a connection to a lever system sensitive to the diameter on which the hose is being wound about the drum.

According to the invention, the concept takes the form for example of a single cast piece comprising a main duct adjacent to the cylindrical chamber of a drive turbine for the hose winding drum, and with which it communicates via an aperture provided in said cylindrical chamber, which has its axis perpendicular to the axis of the main duct, a fraction of the flow being deviated into this aperture by a deflector hinged parallel to the chamber axis.

The amount of said flow fraction, on which the average speed of the turbine depends, can be chosen at the discretion of the operator, whereas the variation in the speed of rotation of the turbine about this average speed is determined by a deviation member sensitive to the diameter on which the hose is currently rewinding, such as to vary its position relative to the impeller of the turbine, which during an irrigation cycle is traversed by said flow fraction selected via said deflector.

Said impeller preferably consists of an impeller with spiral blades having their entry edge bent in the direction of rotation of the impeller, said deviation member preferably consisting of a fin able to rotate, through successive steps, between a initial position in which it is nearly parallel to the water flow directed towards the impeller, and a final position in which it is nearly perpendicular to said flow, the lesser speed occurring in said second position.

Basically, as the diameter on which the hose is rewinding varies, the position of said fin also varies, with a corresponding change in the angle of incidence between the water and the blades of the impeller, so that this latter rotates each time at a lesser speed in order, by way of suitable output motion reduction means, to drag the sprinkler carriage towards the drum trolley at constant speed.

The characteristics and constructional merits of the invention will be apparent from the detailed description given hereinafter with reference to the accompanying figures which show a preferred embodiment thereof by way of non-limiting example.

Figure 1 is an elevational view of the invention with the turbine cover removed.

Figure 2 is an elevational view of the invention from the opposite side to the preceding, to a reduced scale, and with the deflector cover removed.

Figure 3 is a frontal view of the deflector cover with the associated lever system for the deflector operation and adjustment.

Figure 4 is a section on the line IV-IV of Figure 2 to an enlarged scale.

Figure 5 shows the invention associated with a usual drum trolley.

Figure 6 is a section on the line VI-VI of Figure 5, to an enlarged scale.

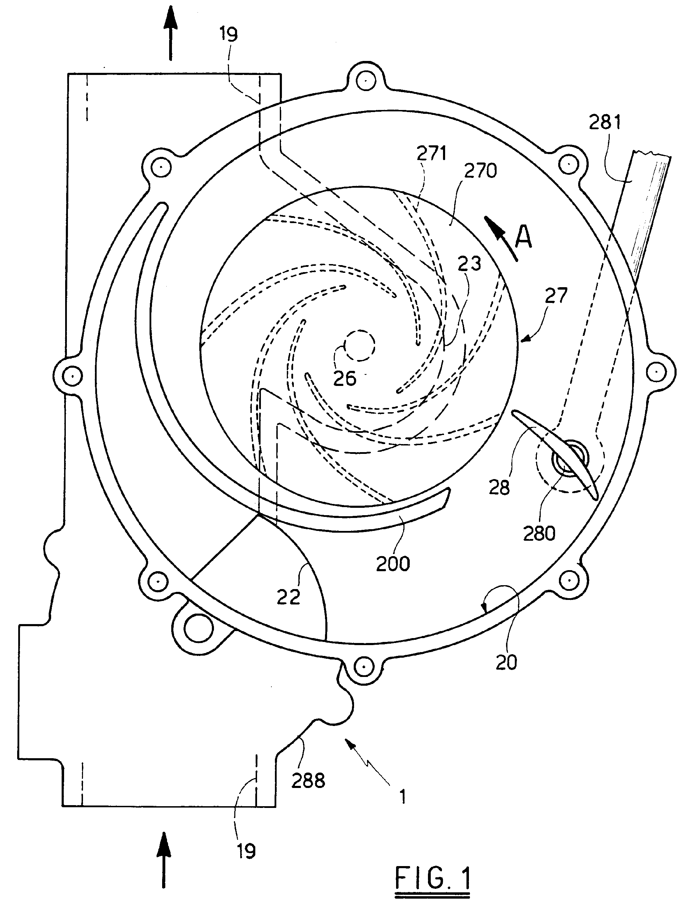

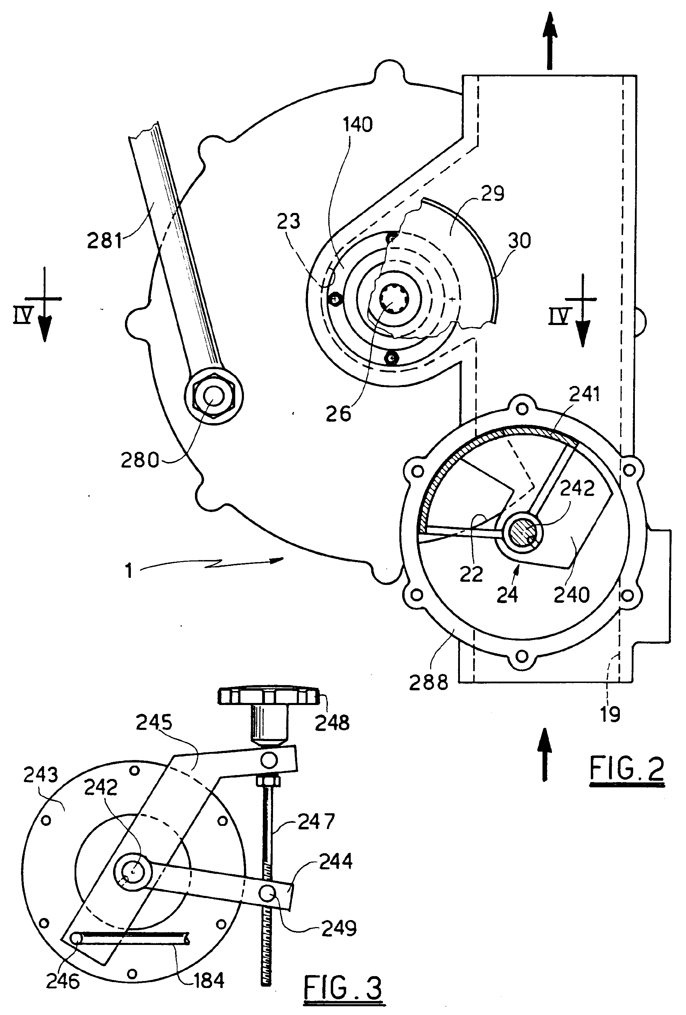

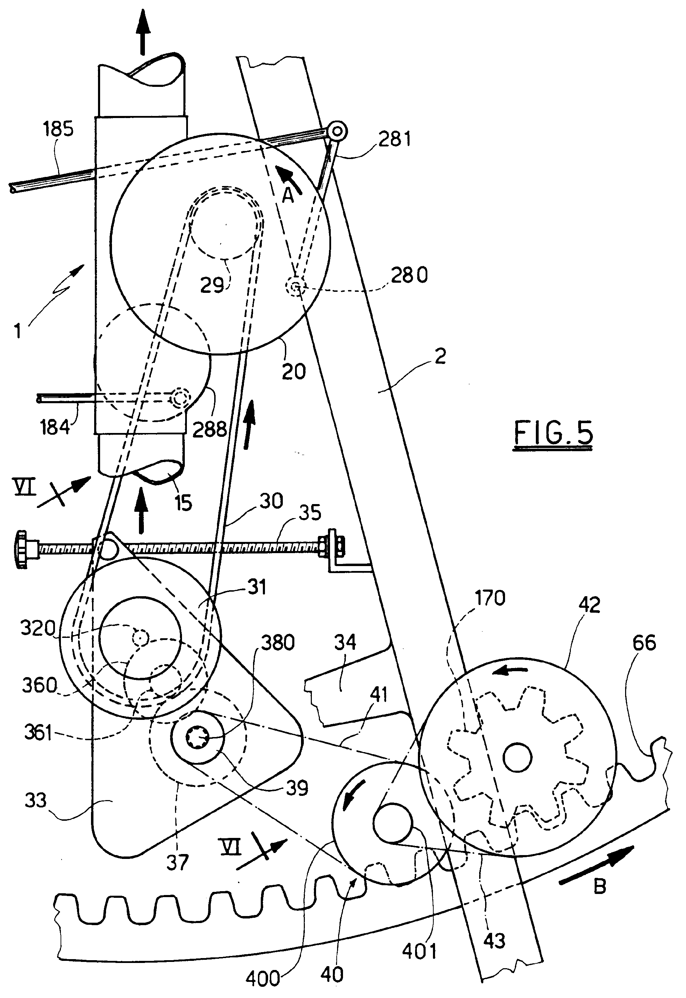

Said figures, and in particular Figures 1 and 2, show a casing 1 to be mounted on one side of a usual drum trolley 2 (see Figure 5) of a likewise usual irrigation sprinkler device, of which the sprinkler skid or carriage is not shown for clarity.

The hose winding drum of said trolley 2 is provided with a ring gear 66 of known type, a feeler device of known type being associated with said drum.

The irrigation water is supplied by suitable pumping unit and reaches the casing 1 of the invention via a feed pipe 15 (Figure 5).

From the exit of the casing 1 the water passes via an elbow (Figure 5) and a seal joint (not shown) into the drum hub, to then reach the hose which is wound on it in several superposed helical layers.

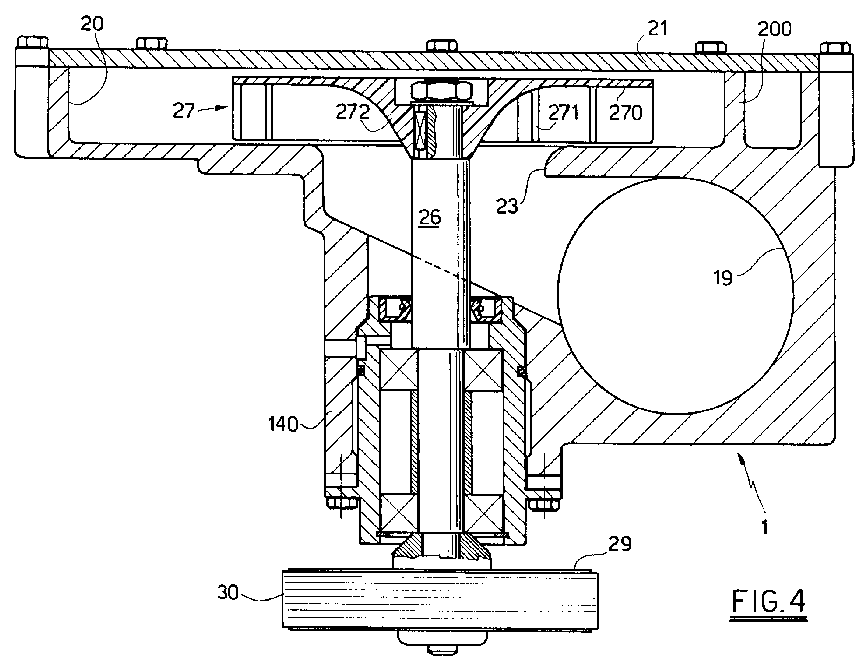

As can be seen in Figures 1, 2 and 4, said casing 1 comprises a straight duct 19 of constant cross-section for connecting together said tube 15 and elbow, and a cylindrical operating chamber 20 having its axis perpendicular to that of the duct 19. The chamber 20 is closed on one side by a cover 21 (Figure 4), and is provided on its other side with two ports 22 and 23, both communicating with the duct 19. The first, 22, of said ports is tangential to the peripheral region of the chamber 20 (Figures 1, 2) and constitutes the water inlet aperture, whereas the second port 23 is parallel but eccentric to the axis of said chamber, to define the water discharge port. The degree of opening of the entry port 22 is determined by an adjustable throttle valve 24, the discharge port 23 being traversed centrally by the shaft 26 of a bladed impeller 27.

Specifically, as can be better seen in Figure 2, said valve 24 is received in a cylindrical seat 288 located transverse to the duct 19, and comprises a shaped plate 240 positioned on the bottom of said seat 288 and a wall 241 shaped as a portion of a cylindrical surface and received, practically as an exact fit, in said seat 288.

The plate 240 acts as a valving member for said port 22, and the wall 241 acts as a deflector member which controls the entry of irrigation water into the chamber 20.

Said plate 240 and wall 241 are fixed to a central shaft 242 which projects beyond the cover 243 of said seat, as can be seen in Figure 3, where a lever 244 is fixed to it. In addition, on said shaft 242 there is rotatably mounted a rocker lever 245 which at one end is pivoted at 246 to a connecting rod 184, whereas at its other end it carries a threaded adjustment rod 247 which is rotatable but axially locked. As can be seen in Figure 3, this latter is provided with an operating knob 248 and is screwed through a transverse pin 24g which is idly mounted on the lever 244.

Said connecting rod 184 is connected to the feeler of the hose winding drum by way of a slotted aperture which makes the connecting rod insensitive to the angular movements of the feeler during the winding of the hose.

As can be clearly seen in Figures 1 and 4, said impeller 27 comprises a disc 270 situated on the same side of the operating chamber 20 as the cover 21 (Figure 4), and comprising on its opposite face a circumferential series of equidistant spirally extending blades 271.

With reference to Figure 1, the entry edge of the blades 271 is inclined in the direction of rotation A of the impeller 27 and forms an acute angle with the circumferential edge of the disc 270. In contrast, the exit edge of said blades 271 is nearly tangential to the base of a frusto-conical hub 272 (Figure 4) acting as a connector between the disc 270 and the shaft 26 of the impeller 27, and as an element for conveying the water towards the discharge port 23.

From Figure 1 it can be seen that the outer diameter of the impeller 27 is substantially one half of the inner diameter of the chamber 20, between said impeller 27 and entry port 22 there being provided a spiral wall 200 which is flush with this latter and of which the free end projects beyond it in the water flow direction.

The same free end of said spiral wall 200 is nearly tangential to the impeller 27, whereas its opposite end joins smoothly into the inner surface of the chamber 20 at a point substantially diametrically opposite the port 22.

In this manner, between said chamber 20, wall 200 and impeller 27 there is defined a kind of volute, the width of which reduces gradually in the left hand direction (Figure 1) from the port 20 to the free end of said spiral wall 200.

Finally, downstream of said free end there is a fin 28 for deviating the arriving water flow and consisting of a slightly curved plate having its concavity facing the inner region of the chamber 20.

Said fin 28 has a height equal to the depth of the chamber 20 and a width practically equal to the distance between the impeller 27 and the inner surface of the chamber 20. The fin 28 is fixed to a rotatable pin 280 passing through the base of the chamber 20, as can be best seen in Figure 2, where it is connected to a lever 28 to which a connecting rod 185 is connected (see Figure 5). This latter is pivoted at its other end to the aforesaid feeler.

At the beginning of the irrigation stage, the sprinkler carriage is moved to the end of the strip of ground to be irrigated, and the feeler moves correspondingly. During this operation the connecting rod 185 moves towards the right in Figure 5, to set the fin 28 (see Figure 1) nearly parallel to the circumferential edge of the impeller 27.

It should be noted that said position of the fin 28 corresponds to complete unwinding of the hose, whereas if the hose is not completely unwound the fin would lie in a corresponding intermediate position. During the unwinding of the hose the connecting rod 184 remains insensitive to the angular movements of the feeler, and the throttle valve 24 remains closed.

At this point water can be fed into the casing 1, and to operate the turbine it is necessary only to push the connecting rod 184 towards the right (Figure 5), which then opens the valve 24, to set it for example in the position shown in Figure 2.

The degree of opening of this latter can obviously be adjusted at will by operating the threaded rod 247 on the basis for example of the pressure and flow characteristics of the irrigation water, the particular season, and any requirements for the particular type of crop.

It is also apparent that varying the degree of opening of the valve 24 also varies the quantity of water reaching the impeller 27, and thus the average impeller rotation speed.

When said average rotation speed has been selected, the water quantity through the turbine remains constant for the entire irrigation cycle, the variation in the rotation speed as the hose rewinding diameter varies being governed by the fin 28.

In this respect, each time the winding of a new hose layer begins on the drum, said fin 28, under the control of the connecting rod 185, undergoes a corresponding angular movement towards the impeller, to thus deviate the arriving water flow. The impeller rotation speed correspondingly falls, while the rate of rewinding of the hose 13 remains constant during the entire irrigation cycle.

On termination of the irrigation cycle the fin 28 is in the position shown in Figure 1, and the connecting rod 184 (see Figure 5), under the control of the sprinkler carriage, then closes the valve 24 to thus halt the turbine. Finally, with reference to Figure 2, it should be noted that when the valve 24 is in the closed position it is completely outside the inner outline of the duct 19.

The linkage for reducing the output motion of the turbine is shown in Figures 4, 5 and 6.

From Figure 4 it can be seen that on the casing 1 there is provided a support 140 for the shaft 26 of the impeller 27, this shaft extending beyond said support 140 to carry a pulley 29.

This latter drives a V belt 30 which passes about an underlying pulley 31 of variable diameter (see Figure 5), the shaft 31 on which it is fixed being rotatably mounted on a case 33.

The case 33 is lowerly pivoted to a bracket 34 branching from the frame of the trolley 2 (see Figure 5), and is upperly engaged with a threaded bar 35 which is rotatably mounted but axially locked on the same frame.

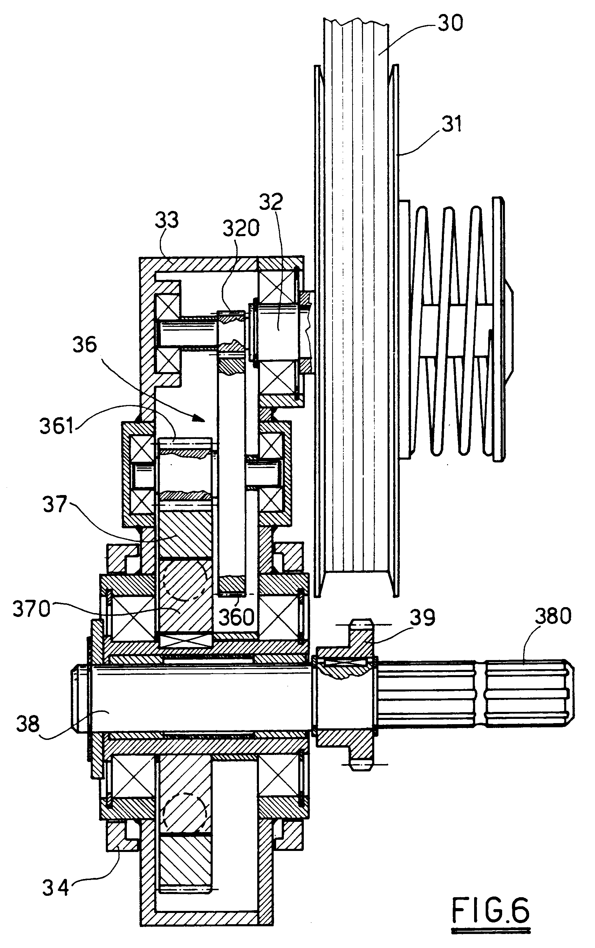

By means of said threaded bar 35 the pitch circle diameter of the pulley 31 can be varied, with simultaneous variation in the transmission ratio between the pulleys 29 and 31 (see Figures 5, 6).

From Figure 6 it can be seen that on the shaft 32 of said pulley 31 there is provided toothing 320 which engages with the larger diameter toothing 360 of an underlying double gear wheel 36, this latter rotatably mounted on the case 33.

The smaller diameter toothing 361 of said gear wheel 36 engages with an underlying ring gear 37 mounted by way of a free-wheel device 370, on a shaft 38 which is coaxial to the axis about which the case 33 rotates on the trolley 2.

Said free-wheel device is arranged to engage when the ring gear 37 rotates left-handed in Figure 5.

Said shaft 38 extends to the outside of the case 33 where it comprises a sprocket 39 (see Figure 6) followed by a splined portion 380, the purpose of which will be clarified hereinafter.

As can be seen in Figure 5, a chain 41 extends between the sprocket 39 and the greater-diameter toothing 400 of a subsequent double sprocket 40, this latter mounted idly on the frame.

A further chain 43 extends between the smaller diameter toothing 401 of said double sprocket 40 and a subsequent sprocket 42.

Finally, on the shaft of the sprocket 42 there is fixed a pinion 170, which rotates the hose winding drum in the direction indicated by B in Figure 5.

At this point, it should be noted that the advantageous presence of said free-wheel device 370 enables the splined portion 380 of the shaft 38 to be used for winding the hose without the need to feed water to the impeller 27.

This can be done by using a normal power take-off of an agricultural tractor, and rotating said power take-off in the anticlockwise direction with reference to Figure 5.

It should also be noted that the presence of said free-wheel device 370 enables the turbine to be kept at rest during the winding of the hose.

## Claims

1. A unit for driving the winding drum of self-propelled irrigation sprinklers in general, comprising:
- a main irrigation water passage duct (19) for connecting a pumping unit to the hose leading to the sprinkler;
- a cylindrical chamber (20) communicating to said main duct (19) vian an entry port (22) and a discharge port (23), having its longitudinal axis perpendicular to the axis of said main duct (19) the wall of which comprises an aperture, defining said entry port (22);
- a turbine (27) housed within said chamber (20) and having its shaft connected by a linkage to the hose winding drum;
- a deviation member (28) located immediately upstream of the turbine and sensitive to the diameter on which the hose (13) is wound on the drum, so as to rotate angularly through successive steps transversely to the water flow deriving from said main duct (19), between a first position in which it is nearly parallel to said flow and a second position in which it lies transversely to the flow in order to deviate it towards the impeller (27) of said turbine;
said deviation member being rotated by a lever system sensitive to the diameter of the hose (13) wound on the drum;
- valve means (24) for closing the water flow when the hose has been totally wound on the drum; characterised in that:
- said discharge port (23) of said chamber (20) is coaxial to the turbine shaft (26);
- said deviation member (28) is rotated from the first position toward the second position when said diameter increases;
- said valve means (24) is adjustable at will from the outside for the purpose of adjusting the water flow directed towards the impeller through said entry port (22),
- the valve means (24) comprising a plate (240) parallel to the axis of the main duct (19) for adjusting said entry port (22) and a deflector-wall (241) which cuts said axis and which is moveable between two positions: a completely and a partially obstructed position of the main duct (19).

2. A unit as claimed in the preceding claims, characterised in that said turbine (27) comprises a circumferential serie of spirally extending identical equidistant blades (271) the entry edges of which form an acute angle with the circumferential edge of the impeller and are inclined in the direction of rotation (A) of this latter, their exit edges being nearly tangential to the hub (272) by which the impeller (27) is connected to the respective shaft (26).

3. A unit as claimed in the preceding claims, characterised in that the outer diameter of said impeller is less than the inner diameter of said operating chamber (20), this latter being provided with an inner spiral-shaped wall (200) which at its upstream end (with reference to the direction of rotation A of the impeller) is smoothly connected to the inner surface of said chamber (20), while at its other end it is flush with the inner edge of said entry port (22) and is nearly tangential to the impeller (27), to form a kind of volute for distributing the water which reaches said impeller.

4. A unit as claimed in claims 1 and 3, characterised in that said deviator member (28) consists of a slightly curved fin having its concavity facing the interior of said operating chamber and located at the commencement of said volute, said fin being hinged to said chamber (20) on an axis parallel to the impeller axis and emerging from it to be connected to a lever system (281, 185) terminating in a feeler which rests against the hose wound on the drum.

5. A unit as claimed in claims 1, and 4, characterised in that said valve means (24) consist of a shaped piece comprising, associated with each other, said plate and said wall (241) said shaped piece emerging from said main duct via a shaft (242) with which there are associated a rigid lever (244) and an idle lever (245), these latter being connected together by a threaded adjustment rod (247), the second lever (245) of said pair being connected to said feeler by a connecting rod (184) by way of a slot allowing this latter to slide freely relative to the feeler.

## Patentansprüche

1. Eine Einheit zum Antreiben der Schlauchtrommel von selbstfahrenden Bewässerungssprinklern im allgemeinen, umfassend:
- eine Hauptleitung (19) für den Durchfluß des Bewässerungswassers, die eine Pumpeneinheit mit dem Schlauch verbindet, das zum Sprinkler führt;
- eine Zylinderkammer (20), kommunizierend mit besagter Hauptleitung (19) über eine Eintrittsöffnung (22) und einer Auslaßöffnung (23), mit der Längsachse senkrecht zur Achse besagter Hauptleitung (19), deren Wand eine Öffnung enthält, die besagte Eintrittsöffnung (22) definiert;
- eine Turbine (27), die im Innern der besagten Kammer (20) untergebracht ist, deren Welle mittels einem Hebelsystem an die Schlauchtrommel angeschlossen ist;
- ein Ablenkelement (28), das unmittelbar vor der Turbine positioniert ist und das empfindlich auf den Durchmesser ist, mit dem der Schlauch (13) auf die Trommel gewickelt ist, sodaß es mit aufeinanderfolgenden Schritten winklig quer zu dem von besagter Hauptleitung (19) kommenden Wasserfluß zwischen einer ersten Position, in der das Organ fast parallel zum besagten Fluß ist, und einer zweiten Position, in der es quer zum Fluß liegt, rotiert, sodaß es gegen das Laufrad (27) besagter Turbine umgeleitet wird; besagtes Ablenkelement wird durch ein Hebelsystem, das empfindlich auf den Durchmesser des auf die Trommel gewickelten Schlauches (13) ist, gedreht;
- Ventilelement (24) zur Unterbrechung des Wasserflusses bei totaler Schlauchaufwicklung auf die Trommel, dadurch gekennzeichnet, daß:
- besagte Auslaßöffnung (23) besagter Kammer (20) koaxial zur Turbinenwelle (26) steht;
- besagtes Ablenkelement (28) von der ersten Position zur zweiten Position dreht, wenn besagter Durchmesser zunimmt;
- besagtes Ventilelement (24) von außen beliebig einstellbar ist, um den durch besagte Eintrittsöffnung (22) auf das Laufrad gerichteten Wasserfluß zu regulieren;
das Ventilelement (24) umfasst eine Platte (240) parallel zur Achse der Hauptleitung (19) für die Einstellung besagter Eintrittsöffnung (22) und eine Ablenkwand (241), die besagte Achse schneidet und zwischen zwei Positionen beweglich ist: eine Position der vollständigen und eine der teilweisen Verstopfung der Hauptleitung (19).

2. Eine Einheit entsprechend den vorstehenden Ansprüchen, dadurch gekennzeichnet, daß die Turbine (27) auf dem Kreisumfang eine Reihe von Schaufeln (271) mit gleichem Abstand aufweist, die sich spiralförmig hinziehen und deren Eintrittskanten einen spitzen Winkel mit dem Außenkanten des Laufrades bilden und in der Laufrichtung (A) geneigt sind.

3. Eine Einheit entsprechend den vorstehenden Ansprüchen, dadurch gekennzeichnet, daß der Außendurchmesser besagten Laufrades geringer ist als der Innendurchmesser besagter Kammer (20), diese letztgenannte ist mit einer spiralförmigen Innenwand (200) ausgestattet, deren vorliegendes Ende (in bezug auf die Laufrichtung A des Laufrades) mit der inneren Oberfläche besagter Kammer (20) verbunden ist, während das andere Ende mit der Innenkante besagter Eintrittsöffnung (22) bündig und fast tangential zum Laufrad (27) ist, wodurch es eine Art von Spirale für die Wasserverteilung bildet, die besagtes Laufrad erreicht.

4. Eine Einheit entsprechend den Ansprüchen 1 und 3, dadurch gekennzeichnet, daß das Ablenkelement (28) aus einer leicht gebogenen Klappe besteht, deren Hohlwölbung nach der Innenseite besagter Betriebskammer gerichtet ist und sich am Anfang besagter Spirale befindet, besagte Klappe ist mit der Kammer (20) auf einer Achse parallel zur Laufradachse mit Scharnier verbunden und steht daraus hervor für die Verbindung mit einem Hebelsystem (281, 185), das in einem Fühler endet, der gegen den auf die Trommel gewickelten Schlauch positioniert ist.

5. Eine Einheit entsprechend den Ansprüchen 1 und 4, dadurch gekennzeichnet, daß das Ventil (24) aus einem geformten Element besteht, die besagte Platte und besagte Wand (241), die miteinander verbunden sind, umfasst, und dadurch, daß besagtes geformtes Element aus besagter Hauptleitung durch eine Welle (242) hervorsteht, an welche ein starrer Hebel (244) und ein untätiger Hebel (245), die miteinander über eine Gewindeeinstellstange verbunden sind, zugeordnet sind, während der zweite Hebel (245) besagten Paares über eine Verbindungsstange an den Fühler längs einer Nut angeschlossen ist, wodurch die Stange gegenüber dem Fühler frei laufen kann.

## Revendications

1. Unité d'entraînement pour rouleau enrouleur de tuyau d'arroseurs d'irrigation automatique en général, comprenant :
- un conduit principal de passage d'eau d'irrigation (19) pour relier une unité de pompage à un tuyau qui conduit à l'arroseur ;
- une chambre cylindrique (20) réalisant une communication vers ledit conduit principal (19) par l'intermédiaire d'un orifice d'entrée (22) et un orifice de décharge (23), dont l'axe longitudinal est perpendiculaire à l'axe dudit conduit principal (19) dont la paroi comporte une ouverture définissant ledit orifice d'entrée (22) ;
- une turbine (27) disposée dans ladite chambre (20) et ayant son arbre connecté par une tringlerie au rouleau enrouleur de tuyau ;
- un élément déflecteur (28) disposé immédiatement en amont de la turbine et sensible au diamètre selon lequel le tuyau (13) est enroulé sur le rouleau de façon à tourner de façon angulaire en étapes successives transversalement par rapport à l'écoulement de l'eau provenant dudit conduit principal (19), entre une première position dans laquelle il est presque parallèle audit écoulement et une seconde position dans laquelle il est placé transversalement par rapport à l'écoulement de façon à le dévier vers le rotor (27) de ladite turbine ; ledit élément déflecteur étant amené à tourner par un système de leviers sensibles au diamètre du tuyau (13) enroulé sur le rouleau ;
- des moyens formant valve (24) pour fermer le circuit d'eau lorsque le tuyau a été totalement enroulé sur le rouleau enrouleur ; caractérisée en ce que :
- ledit orifice de décharge (23) de ladite chambre (20) est coaxial à l'arbre de la turbine (26) ;
- ledit élément déflecteur (28) tourne à partir de la première position vers la seconde position lorsque ledit diamètre augmente ;
- lesdits éléments formant valve (24) sont susceptibles d'être réglés à la demande à partir de l'extérieur dans le but d'ajuster l'écoulement d'eau dirigé vers le rotor par l'intermédiaire dudit orifice d'entrée (22),
les moyens formant valve (24) comportant une plaque (240) parallèle à l'axe du conduit principal (19) pour ajuster ledit orifice d'entrée (22) et une paroi déflectrice (241) qui coupe ledit axe et qui est mobile entre deux positions : une position complètement fermée du conduit principal (19) et une position partiellement fermée de celui-ci.

2. Unité telle que revendiquée dans la revendication précédente, caractérisée en ce que ladite turbine (27) comporte une série circonférentielle de lames équidistantes identiques s'étendant en spirale (271) dont les bords d'entrée sont à angle aïgu par rapport au bord circonférentiel du rotor et sont inclinés dans la direction de rotation (A) de ce dernier, leurs bords de sortie étant presque tangentiels au moyeu (272) par lequel le rotor (27) est connecté à son arbre (26).

3. Unité telle que revendiquée dans les revendications précédentes, caractérisée en ce que le diamètre extérieur dudit rotor est inférieur au diamètre intérieur de ladite chambre de fonctionnement (20), cette dernière comportant une paroi interne en forme de spirale (200) qui à son extrémité amont (si l'on se réfère au sens de rotation (A) du rotor), est connectée de façon progressive à la surface interne de ladite chambre (20), alors qu'à son autre extrémité elle se trouve de niveau avec le bord intérieur dudit orifice d'entrée (22) et est presque tangentielle au rotor (27) de façon à former une sorte de volute pour distribuer l'eau qui atteint ledit rotor.

4. Unité telle que revendiquée dans les revendications 1 et 3, caractérisée en ce que ledit élément déflecteur (28) consiste en une ailette incurvée dont la concavité se trouve en face de l'intérieur de ladite chambre et est disposée au commencement de ladite volute, ladite ailette étant articulée à ladite chambre (20) selon un axe parallèle à l'axe du rotor et émergeant à partir de celui-ci de façon à être connecté à un système de leviers (281, 185) qui se terminent par un détecteur qui repose contre le tuyau enroulé sur le rouleau enrouleur.

5. Unité telle que revendiquée dans les revendications 1 et 4, caractérisée en ce que lesdits moyens formant valve (24) consistent en une pièce de forme comportant ladite plaque et ladite paroi (241) associées entre elles, ladite pièce de forme sortant dudit conduit principal par l'intermédiaire d'un arbre (242) avec lequel se trouve associé un levier rigide (244) et un levier fou (245), ces derniers étant connectés l'un à l'autre par l'intermédiaire d'une tige de réglage filetée (247), le second levier (245) de ladite paire de leviers étant connecté audit moyen de détection par une tige de liaison (184) par l'intermédiaire d'une fente permettant à ce dernier de coulisser librement par rapport aux moyens formant détecteur.
